# EUROPEAN PATENT SPECIFICATION

(11) **EP 0 417 714 B1**
(45) Date of publication and mention of the grant of the patent: **01.02.1995**
(21) Application number: 90117443.3
(22) Date of filing: 11.09.1990
(51) Int. Cl.: A62D 3/00

(54) **Method for removal of dioxin generated in waste combustion**
Verfahren zur Entfernung aus der Verbrennung von Abfall anfallenden Dioxin
Procédé pour l'élimination de dioxine provenant de la combustion de déchets

(30) Priority: 11.09.1989 JP 232987/89; 06.09.1990 JP 236165/90
(43) Date of publication of application: 20.03.1991
(73) Proprietor: NKK CORPORATION, Tokyo 100 (JP); EBARA CORPORATION, Ohta-ku, Tokyo (JP)
(72) Inventor: Machi, Sueo c/o Takasaki Lab.of Japan Atomic, Takasaki-shi, Gunma-ken (JP); Sato, Shoichi c/o Takasaki Lab. of Japan Atomic, Takasaki-shi, Gunma-ken (JP); Tokunaga, Okihiro c/o Takasaki Lab.of Japan Atomic, Takasaki-shi, Gunma-ken (JP); Aoki, Yasushi c/o Takasaki Lab.of Japan Atomic, Takasaki-shi, Gunma-ken (JP); Suda, Shouichi, Chiyoda-ku, Tokyo (JP); Miyachi, Tsuneharu, Chiyoda-ku, Tokyo (JP); Shibamura, Yokichi, Chiyoda-ku, Tokyo (JP); Agarida, Toru, Ohta-ku, Tokyo (JP); Suzuki, Ryoji, Ohta-ku, Tokyo (JP); Kawamura, Keita, Fujisawa-shi, Kanagawa-ken (JP)
(74) Representative: Pfenning, Meinig & Partner

(56) References cited:
- DE-A- 3 404 053
- DE-A- 3 625 232
- US-A- 4 832 806
- JAPANESE PATENTS GAZETTE, week K13, 11th May 1983, section Ch: Chemical, page14, accession no. 31302 K/13, Derwent Publications Ltd, London, GB; & Jp-A-58 030 395

## Description

This invention relates to a method for removal of dioxin generated during the combustion of waste material, and particularly to a method for the removal of dioxin present in waste incineration ashes comprising irradiating the ashes with ionizing radiation.

Dioxin consists of 75 compounds which are generically known as polychlorinated dibenzo-p-dioxins (PCDDs). Many of these compounds are hazardous. Of them, the most toxic compound is 2,3,7,8-tetrachlorodibenzo-p-dioxin (2,3,7,8-TCDD). These compounds are generated in a variety of sources such as chemical plants producing organochlorine compounds, combustion steps including waste incineration, and the like. Therefore, a different method for removing the said compounds must be appropriately established and employed depending upon the source in which they are generated.

In order to remove dioxin, there have heretofore been investigated various methods, for example, (1) a method utilizing thermal decomposition, (2) a method wherein generation of dioxin is suppressed by greater combustion efficiency, (3) a method wherein dioxin is collected and removed by an improved waste gas treatment facility and (4) a method wherein dioxin is dissolved in organic solvents and irradiated with γ-rays [Experientia 39 (1978), p. 1126 - and ibid., 41 (1985) p. 1082 -]. None of these methods, however, has yet provided a satisfactory solution which can be practically employed. The DE-A-36 25 232 discloses a method and apparatus for removing polyhalogenated, especially polychlorinated, hydrocarbons from fluids like waste oils by using electron radiation of low energy having an acceleration voltage of 150 to 350 kV. The DE-A-34 04 053 describes a method for decontamination of anorganic and/or organic materials contaminated with polyhalogenated hydrocarbons by irradiating the materials with γ-radiation to achieve radiolysis of the polyhalogenated hydrocarbons.

It is an object of the invention, therefore, to provide a method for the removal of dioxin generated during the combustion of waste material by irradiating waste incineration ash in the presence of water with ionizing radiation.

Other object and advantages of the present invention may become apparent to those skilled in the art from the following description and a drawing.

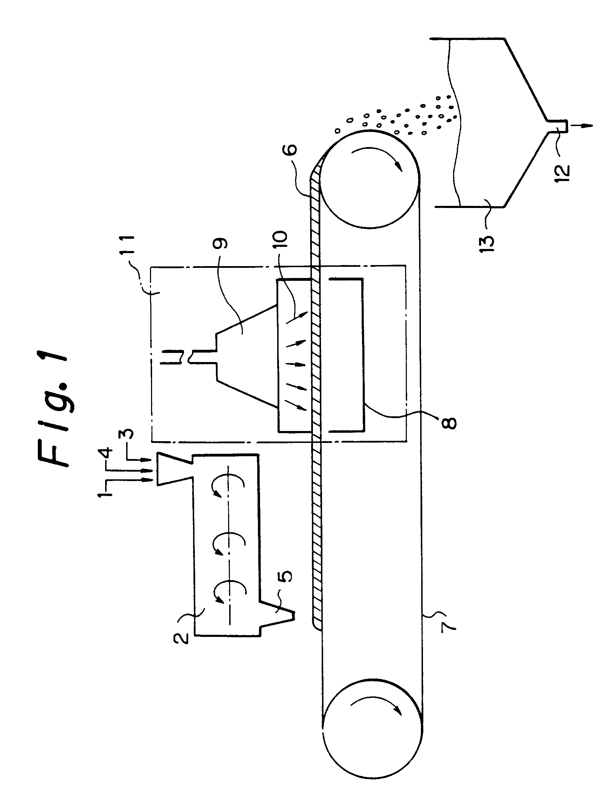

Fig. 1 is a schematic flow sheet of the method of this invention according to one embodiment.

In the present invention, the waste incineration ash is dry fly ash obtained by collecting incineration fly ash by a dry type dust collector such as an electrostatic precipitator, cyclone or the like. When the dry fly ash is uniformly mixed with water, the removal of dioxin present in the ash becomes more effective. The waste incineration ash may further be collected by a semi-dry type collector (a waste gas treatment facility, in particular), a wet type gas treatment facility, a wet type dust collector, or a combination of these apparatuses.

The temperature of the waste incineration ash to be irradiated prefers to be in a range of from ambient temperature to ca. 80°C.

The mixing of dry fly ash with water can be effected by kneading dry fly ash with water or water-containing sludge (e.g. waste water sludge obtained in a wet type gas treatment facility or a wet type dust collector) to convert it into a paste containing ca. 10 - 90 wt% of water, preferably 20 - 80 wt%. When incineration fly ash is treated by a wet type gas treatment facility or a wet type dust collector, the incineration fly ash is collected directly and the resulting sludge after water separation contains dioxin; therefore, the sludge after being passed through a dehydration step to adjust it to ca. 10 - 90 wt% of water, preferably 20 - 80 wt%, can be irradiated with electron beam radiation or the like. It is possible that when a dry type dust collector is used in combination, the collected dry fly ash may be introduced into the waste water treatment tank of the wet type gas treatment facility or the wet type dust collector, the waste water sludge obtained from the waste water treatment tank be passed through a dehydration step, and the dehydrated sludge then be irradiated with, for example, electron beam radiation.

An apparatus for the removal of dioxin generated in waste combustion comprises:
a mixing means for mixing a waste incineration ash collected by a dust collector, with water or a water-containing sludge;
a transfer means for transferring the mixture obtained by the mixing means, to an irradiation chamber and also for transferring the irradiated mixture out of the irradiation chamber; and
a source of electron beam radiation or the like, for irradiating the mixture transferred into the irradiation chamber by the transfer means.

Next, the present invention is described by referring to the accompanying drawing.

Fig. 1 is a flow chart illustrating one embodiment of the present invention. In Fig. 1 is shown a method wherein dry fly ash is used as the waste incineration ash, waste water sludge and water are used for water supply, and they (the fly ash, the waste water sludge and water) are mixed and irradiated with electron beam radiation or the like.

In Fig. 1, dry fly ash 1 collected by an electron precipitator or a cyclone is introduced into a mixing tank 2. Simultaneously, waste water sludge 3 obtained in a wet type gas treatment facility or a wet type dust collector is also introduced into the mixing tank 2. In the mixing tank 2, the dry fly ash 1 and the waste water sludge 3 are mixed into a uniform paste. At this time, water is added thereto as necessary.

The paste is taken out of the mixing tank 2 through an outlet 5 and placed on a belt conveyor 7 in a layer of uniform thickness. The belt conveyor 7 passes at a constant speed through an irradiation chamber 8. During the passage therethrough, the paste layer is irradiated with an electron beam 10 supplied by an electron beam accelerator 9, whereby the dioxin present in the paste layer is decomposed and converted to nonhazardous substances. The irradiated paste is carried out of the irradiation chamber 8 by the belt conveyor 7 and conveyed to a storage tank 13. When the amount of irradiated paste in the storage tank 13 reaches a given level, the treated paste is taken out of the storage tank 13 through an outlet 12 and disposed of by dumping, burial or the like.

The addition of the waste water sludge to the dry fly ash to make the ash into a paste is not always necessary. Water may simply be added, followed by mixing, to thereby obtain a paste. The waste water sludge contains fly ash and dioxin both collected by a wet type waste gas treatment facility or a wet type dust collector; therefore, in order to decompose and remove the dioxin, it is possible to make the sludge itself or a mixture of the sludge and water into a paste and to irradiate the paste with electron beam radiation or the like. This method is also one of the embodiments of the present invention.

Example of the ionizing radiation includes electron beams, α-rays, β-rays, γ-rays and X-rays. The dose of such ionizing radiation within the range of ca. 10 - 2,000 kGy is appropriately employed depending upon the concentration of dioxin and the degree of its removal.

In the treatment of combustion gas generated in the combustion of the waste material, the wet type gas treatment facility in which the removal of HCl is a main purpose is a washing apparatus using aqueous NaOH solution, and it is ordinarily used in combination with a dry type dust collector; the resulting washings are treated with FeCl₃ and a small amount of a polymer coagulant to give rise to precipitation; the precipitate is dehydrated by a dehydrator to obtain waste water sludge. In this case, since dioxin has very low solubility in water (in the order of ppb), the amount of dioxin present in the water separated can be ignored and it is sufficient that only the waste water sludge is treated with radiation.

In the method for removal of dioxin according to the present invention, there are formed, in the ash irradiated with electron beam radiation or the like, a number of chemically active components (active species) by the unique action of the radiation; these active species decompose dioxin present in the ash, into nonhazardous substances. That is, when a water-containing combustion ash is irradiated with electron beam radiation or the like, firstly there are formed active species such as OH, H and the like by the interaction between the radiation and the water, then these active species act directly on the dioxin present in the ash, to convert the dioxin into stable and nonhazardous substances. As shown in the Examples (Table 1) which are given later, the dioxin having smaller numbers of chlorine substituents has not increased after irradiation treatment. From this it can be considered that in the reaction between the active species and dioxin, mainly oxygen atoms constituting the ring structure of dioxin react with the active species, the ring structure thereby being opened and the dioxin, converted into stable chain substances, and thereby being made nonhazardous.

### Examples

The present invention is described in more detail by Examples. However, the present invention is in no way restricted to these Examples.

### Example 1

About 600 g of waste combustion dry ash (collected by an electrostatic precipitator) packed in a batch type irradiation chamber was irradiated with cobalt 60 γ-rays at room temperature, whereby a dose of about 1,000 kGy was absorbed. The amounts of dioxin present in ash before and after irradiation, and the decreases (%) of dioxin by irradiation were measured for each separated dioxin having a different number of chlorine substituents. The results are shown in Table 1. In this example, the water content in dry ash was 0.9% by weight.

### Example 2

Water was added to about 600 g of waste combustion dry ash (collected by an electrostatic precipitator) to adjust the water content in the ash to 50% by weight. The water-added ash was packed in a batch type irradiation chamber and irradiated with cobalt 60 γ-rays at room temperature, whereby a dose of about 1,000 kGy was absorbed. The amounts of dioxin present in ash before and after irradiation, and the decrease (%) of dioxin by irradiation were measured for each separated dioxin having a different number of chlorine substituents. The results are shown in Table 1.

**Table 1**

| Dioxin | Before irradiation (ng/g) | Example 1 | | Example 2 | |
|---|---|---|---|---|---|
| | | Dry ash (ng/g) | Decrease (%) | Dry ash + water (ng/g) | Decrease (%) |
| D₂CDDs | 0.025 | 0.016 | 36 | <0.003 | >88 |
| T₃CDDs | 0.14 | 0.048 | 66 | 0.018 | 87 |
| T₄CDDs | 0.61 | 0.44 | 28 | 0.10 | 84 |
| 2,3,7,8-TCDD | 0.025 | 0.015 | 40 | 0.0021 | 92 |
| P₅CDDs | 1.8 | 0.67 | 63 | 0.14 | 92 |
| H₆CDDs | 4.0 | 1.7 | 57 | 0.47 | 88 |
| H₇CDDs | 5.9 | 2.3 | 61 | 0.80 | 86 |
| O₈CDDs | 5.2 | 1.8 | 65 | 0.93 | 82 |

### Example 3

The procedure according to Example 2 was repeated except that the water content in the ash was adjusted to 20% by weight. The amount of dioxin present in the ash before and after irradiation, and the decrease (%) of dioxin were almost the same as in Example 2 shown in Table 1.

As described above, the present invention can remove dioxin generated during the combustion of waste material by a simple method very efficiently and economically. The present method for dioxin removal in the presence of water decomposes dioxin by irradiation with radiation to make it nonhazardous; accordingly, the ash or sludge after the irradiation treatment can be very conveniently disposed of by burial, etc.; thus, the present invention provides a very safe method for dioxin removal.

Further, the present method for dioxin removal can integrally treat a mixture of (a) dry fly ash and (b) waste water sludge obtained by a wet type gas treatment facility or matter collected by a semi-dry type collector, particularly a waste gas treatment facility. Thus, problems of dioxin generated in waste combustion can be completely eliminated.

## Claims

1. A method for the removal of dioxin generated during the combustion of waste material which comprises adding water to waste incineration ash in such an amount that it contains 10 - 90% by weight of water, and irradiating the ash in a temperature range from ambient temperature to 80°C with ionizing radiation for a total dose of 10 - 2,000 kGy.

2. A method according to Claim 1 wherein the waste incineration ash is fly ash collected during incineration.

3. A method according to Claim 2 wherein the collection of incineration fly ash is conducted by a dry type dust collector.

4. A method according to Claim 2 wherein the collection of incineration fly ash is conducted by a semi-dry type collector.

5. A method according to Claim 2 wherein the collection of incineration fly ash is conducted by a wet type gas treatment facility or a wet type dust collector.

6. A method according to Claim 1 wherein the waste incineration ash to be treated consists of a mixture of (a) dry fly ash collected by a dry type dust collector such as an electrostatic precipitator and cyclone and (b) by a semi-dry type collector.

7. A method according to Claim 1 wherein the waste incineration ash containing water is obtained by adding a water-containing sludge to dry waste incineration ash and kneading them into a paste.

8. A method according to Claim 7 wherein the water-containing sludge is a sludge obtained in a wet type gas treatment facility or a wet type dust collector.

9. A method according to Claim 1 wherein the method comprises introducing waste incineration ash into a waste water treatment tank of a wet type gas treatment facility or a wet type dust collector to thereby obtain a mixture of waste sludge and the waste incineration ash, passing the mixture through a dehydration step to adjust it to 10 - 90% by weight of water, preferably 20 - 80% by weight, and then irradiating the resulting mixture with ionizing radiation.

10. A method according to Claim 1 wherein the method comprises passing waste water sludge containing incineration fly ash, obtained in a wet type gas treatment facility or a wet type dust collector, through a dehydration step to adjust it to 10 - 90% by weight of water, preferably 20 - 80% by weight and then irradiating the resulting sludge with ionizing radiation.

11. A method according to any one of Claims 1 - 10 wherein at least one ionizing radiation selected from among electron beams, α-rays, β-rays, γ-rays and X-rays is used.

## Patentansprüche

1. Verfahren zum Beseitigen von Dioxin, das bei der Verbrennung von Abfallstoffen erzeugt wird, welches das Zugeben von Wasser zu Müllverbrennungsasche in einer Menge, die einen Gehalt von 10-90 Gew.-% Wasser ergibt, und das Bestrahlen der Asche in einem Temperaturbereich von Umgebungstemperatur bis 80°C mit ionisierender Strahlung in einer Gesamtdosis von 10-2000 kGy umfaßt.

2. Verfahren nach Anspruch 1, bei dem die Müllverbrennungsasche aus Flugasche besteht, die bei der Verbrennung eingesammelt wird.

3. Verfahren nach Anspruch 2, bei dem das Einsammeln von Verbrennungsflugasche mit einem Trockenverfahren-Staubsammler durchgeführt wird.

4. Verfahren nach Anspruch 2, bei dem das Einsammeln von Verbrennungsflugasche mit einem Halbtrockenverfahren-Sammler durchgeführt wird.

5. Verfahren nach Anspruch 2, bei dem das Einsammeln von Verbrennungsflugasche mit einer Einrichtung zur Naßbehandlung von Gas oder einem Naßverfahren-Staubsammler durchgeführt wird.

6. Verfahren nach Anspruch 1, bei dem die zu behandelnde Müllverbrennungsasche aus einem Gemisch aus (a) Trockenflugasche, die mit einem Trockenverfahren-Staubsammler wie einem elektrostatischen Abscheider und einem Zyklon eingesammelt worden ist, und (b) Asche, die mit einem Halbtrockenverfahren-Sammler eingesammelt worden ist, besteht.

7. Verfahren nach Anspruch 1, bei dem die wasserenthaltende Müllverbrennungsasche durch Zugeben eines wasserenthaltenden Schlamms zur trockenen Müllverbrennungsasche und Kneten dieser zu einer Paste erhalten wird.

8. Verfahren nach Anspruch 7, bei dem der wasserenthaltende Schlamm ein Schlamm ist, der in einer Einrichtung zur Naßbehandlung von Gas oder einem Naßverfahren-Staubsammler erhalten worden ist.

9. Verfahren nach Anspruch 1, bei dem das Verfahren das Einführen von Müllverbrennungsasche in einen Abwasserbehandlungstank einer Einrichtung zur Naßbehandlung von Gas oder eines Naßverfahren-Staubsammlers zur Gewinnung eines Gemisches aus Abfallschlamm und der Müllverbrennungsasche, das Hindurchführen des Gemisches durch eine Entwässerungsstufe zum Einstellen seines Wassergehaltes auf 10-90 Gew.-%, vorzugsweise 20-80 Gew.-%, und das nachfolgende Bestrahlen des erhaltenen Gemisches mit ionisierender Strahlung umfaßt.

10. Verfahren nach Anspruch 1, bei dem das Verfahren das Hindurchführen von Verbrennungsflugasche enthaltendem Abwasserschlamm, der in einer Einrichtung zum Naßbehandeln von Gas oder einem Naßverfahren-Staubsammler erhalten worden ist, durch eine Entwässerungsstufe zum Einstellen seines Wassergehaltes auf 10-90 Gew.-%, vorzugsweise 20-80 Gew.-%, und das nachfolgende Bestrahlen des entstandenen Schlamms mit ionisierender Strahlung umfaßt.

11. Verfahren nach einem der Ansprüche 1-10, bei dem mindestens eine ionisierende Strahlung angewendet wird, die ausgewählt ist aus Elektronenstrahlen, α-Strahlen, β-Strahlen, γ-Strahlen und Röntgenstrahlen.

## Revendications

1. Procédé d'élimination de la dioxine formée lors de la combustion de déchets, qui comprend l'addition d'eau aux cendres d'incinération des déchets en une proportion telle que leur teneur en eau soit de 10 à 90 % en poids, et l'irradiation des cendres, à une température allant de la température ambiante à 80°C, avec une dose globale de 10 à 2000 kGy d'un rayonnement ionisant.

2. Procédé selon la revendication 1, dans lequel la cendre d'incinération des déchets est de la cendre volante recueillie pendant l'incinération.

3. Procédé selon la revendication 2, dans lequel la séparation de la cendre volante d'incinération est réalisée à l'aide d'un dépoussiéreur de type à sec.

4. Procédé selon la revendication 2, dans lequel la séparation de la cendre volante d'incinération est réalisée à l'aide d'un dépoussiéreur de type semi-sec.

5. Procédé selon la revendication 2, dans lequel la séparation de la cendre volante d'incinération est réalisée à l'aide d'une installation de traitement de gaz de type humide ou par un dépoussiéreur humide.

6. Procédé selon la revendication 1, dans lequel les cendres d'incinération de déchets à traiter consistent en un mélange de cendre volante sèche recueillie (a) dans un dépoussiéreur à sec, tel qu'un précipitateur électrostatique ou un cyclone, et (b) dans un dépoussiéreur de type semi-sec.

7. Procédé selon la revendication 1, dans lequel les cendres d'incinération de déchets, contenant de l'eau, sont obtenues par addition d'une boue aqueuse aux cendres d'incinération de déchets sèches et par malaxage des cendres résultantes en une pâte.

8. Procédé selon la revendication 7, dans lequel la boue aqueuse est une boue obtenue dans une installation de traitement de gaz du type humide ou dans un dépoussiéreur du type humide.

9. Procédé selon la revendication 1, qui comprend l'introduction des cendres d'incinération de déchets dans un réservoir de traitement des eaux résiduaires d'une installation de traitement de gaz de type humide ou d'un dépoussiéreur de type humide, afin d'obtenir un mélange de boue résiduaire et des cendres d'incinération de déchets, le passage du mélange par une étape de déshydratation afin de l'ajuster à 10 à 90 % en poids d'eau, de préférence 20 à 80 % en poids, et ensuite l'irradiation du mélange résultant par un rayonnement ionisant.

10. Procédé selon la revendication 1, qui comprend le passage d'une boue aqueuse résiduaire renfermant de la cendre volante d'incinération, provenant d'une installation de traitement de gaz de type humide ou d'un dépoussiéreur de type humide, par une étape de déshydratation afin de l'ajuster à 10 à 90 % en poids d'eau, de préférence 20 à 80 % en poids, et ensuite l'irradiation du mélange résultant par un rayonnement ionisant.

11. Procédé selon une quelconque des revendications 1 à 10, dans lequel on utilise au moins un rayonnement ionisant choisi parmi les suivants: faisceaux d'électrons, rayons alpha, rayons béta, rayons gamma et rayons X.
